# EUROPÄISCHE PATENTSCHRIFT

(11) **EP 3 658 331 B1**
(45) Veröffentlichungstag und Bekanntmachung des Hinweises auf die Patenterteilung: **07.06.2023**
(21) Anmeldenummer: 18782652.4
(22) Anmeldetag: 19.09.2018
(51) Int. Cl.: B24B 33/08, H02K 15/02

(54) **VERFAHREN ZUR HONBEARBEITUNG EINES STATORS**
METHOD FOR HONING A STATOR
PROCÉDÉ PERMETTANT LE RODAGE D'UN STATOR

(30) Priorität: 02.10.2017 DE 102017122893
(43) Veröffentlichungstag der Anmeldung: 03.06.2020
(73) Patentinhaber: Gehring Technologies GmbH + Co. KG, 73760 Ostfildern (DE)
(72) Erfinder: VAN BOVEN, Andy, South Lyon, Michigan 48178 (US); SCHAEFER, Michael, Howell, Michigan 48843 (US); WIENS, Andreas, 74343 Sachsenheim (DE); FLORES, Gerhard, 73760 Ostfildern (DE)
(74) Vertreter: DREISS Patentanwälte PartG mbB
(86) Internationale Anmeldenummer: PCT/EP2018/075287
(87) Internationale Veröffentlichungsnummer: WO 2019/068462

(56) Entgegenhaltungen:
- EP-A1- 0 549 821
- DE-A1- 10 358 150
- DE-A1- 19 544 282
- DE-A1-102004 047 520
- DE-A1-102015 221 714
- US-A- 3 029 562

## Beschreibung

Die vorliegende Erfindung betrifft ein Verfahren zum Bearbeiten einer Statoröffnung eines Stators und einer Lageröffnung eines elektromechanischen Wandlers, insbesondere eines Elektromotors, wobei das Verfahren die Schritte umfasst, Honen der Statoröffnung mit einem Honwerkzeug und Bearbeiten, vorzugsweise Honen, der Lageröffnung (siehe z.B. WO 96/31936 A1). Die Lageröffnung dient dabei der Aufnahme des Rotors (bzw. einer Rotorwelle auf der der Roter angeordnet ist) des elektromechanischen Wandlers.

Bei elektromechanischen Wandlern, insbesondere Elektromotoren, wirkt sich die Spaltweite zwischen dem Außenumfang des Rotors und dem Innenumfang des Stators auf die Effizienz des elektromechanischen Wandlers aus. Eine kleinere Spaltweite erhöht die Effizienz.

Eine untere Grenze für die erreichbaren Spaltweiten ergibt sich durch das Erfordernis, ein Anstreifen des Rotors im Betrieb zu vermeiden und den Bearbeitungsaufwand für die Oberflächen, insbesondere des Stators, in einem wirtschaftlich/technisch noch sinnvollen Maß zu halten.

Aufgabe der vorliegenden Erfindung ist es, ein Verfahren bereitzustellen, mit dem der Stator sowie die Lageröffnung, die der Aufnahme des Rotors dient, derart bearbeitet werden können, dass eine möglichst geringe Spaltweite zwischen Rotor und Stator möglich ist. Neben einer geringen Spaltweite soll vorzugsweise auch eine koaxiale Positionierung von Rotor und Stator zueinander erreicht werden, um somit eine parallele Lage der Funktionsflächen von Rotor und Stator sicher zu stellen.

Diese Aufgabe wird durch ein Verfahren gemäß Anspruch 1 gelöst. Das erfindungsgemäße Verfahren kennzeichnet sich dadurch, dass ein Werkzeug zur Bearbeitung der Lageröffnung während der Bearbeitung der Lageröffnung über eine Zentriereinrichtung, die in die Statoröffnung eingreift, koaxial zu der Statoröffnung ausgerichtet ist oder, dass das Honwerkzeug zum Honen der Statoröffnung über eine Zentriereinrichtung, die in die Lageröffnung eingreift, koaxial zu der Lageröffnung ausgerichtet ist. Unter einer Zentriereinrichtung für das Werkzeug zur Bearbeitung der Lageröffnung ist dabei eine Einrichtung zu verstehen, die über ein mechanisches Eingreifen in die Statoröffnung eine Ausrichtung der Achse der Bearbeitung der Lageröffnung vorgibt. Beispielsweise kann die Zentriereinrichtung einen Zentrierdorn umfassen, der die Lage der Statoröffnung erfasst und mechanisch mit dem Werkzeug zur Bearbeitung der Lageröffnung derart gekoppelt ist, dass er dessen axiale Lage vorgibt. Denkbar ist auch, dass die Zentriereinrichtung das Honwerkzeug, das zur Bearbeitung der Statoröffnung vorgesehen ist, umfasst. Das Honwerkzeug kann in diesem Fall derart mit dem Werkzeug zur Bearbeitung der Lageröffnung gekoppelt sein, dass beide koaxial zueinander ausgerichtet sind und bei gleichzeitiger Bearbeitung von Statoröffnung und Lageröffnung einen koaxialen Verlauf von Statoröffnung und Lageröffnung sicherstellen.

Unter einer Zentriereinrichtung für das Honwerkzeug zum Honen der Statoröffnung ist dabei eine Einrichtung zu verstehen, die über ein mechanisches Eingreifen in die Lageröffnung eine Ausrichtung der Achse der Honbearbeitung der Statoröffnung vorgibt. Beispielsweise kann die Zentriereinrichtung einen Zentrierdorn umfassen, der die Ausrichtung der Lageröffnung erfasst und mechanisch mit dem Honwerkzeug zur Bearbeitung der Statoröffnung derart gekoppelt ist, dass er dessen axiale Lage vorgibt.

Optional ist es im Sinne der Erfindung möglich, dass das Honwerkzeug zur Bearbeitung der Statoröffnung und das Werkzeug zur Bearbeitung der Lageröffnung ein mehrstufiges Honwerkzeug ist. Dabei kann ein derartiges mehrstufiges Honwerkzeug einen ersten Honabschnitt mit einem ersten Satz Honleisten umfassen und einen zweiten Honabschnitt mit einem zweiten Satz Honleisten. Durch die Anordnung der beiden Honabschnitte auf einer Werkzeugachse ist eine koaxiale Bearbeitung der Statoröffnung und der Lageröffnung stets sichergestellt. Bei Verwendung eines derartigen mehrstufigen Honwerkzeugs stellt der Honabschnitt, der zur Bearbeitung der Statoröffnung verwendet wird, nicht nur das Honwerkzeug zur Bearbeitung der Statoröffnung dar, sondern gleichzeitig auch die Zentriereinrichtung im Sinne der vorliegenden Erfindung.

Im Sinne der Erfindung ist auch, wenn für die Bearbeitung von Statoröffnung und Lageröffnung ein mehrstufiges Werkzeug verwendet wird, dass einen ersten Honabschnitt mit einem ersten Satz Honleisten umfasst, wobei der erste Honabschnitt passive Zentrierleisten umfassen kann, die nach Abschluss einer Honbearbeitung ausgefahren werden können, wobei die Honleisten eingefahren werden können. Die Zentrierleisten können dann als Zentriereinrichtung wirken und das mehrstufige Werkzeug kann einen zweiten Honabschnitt mit einem zweiten Satz Honleisten umfassen, die nach dem Honen der Statoröffnung ausgefahren werden können und die Lageröffnung honen bzw. bearbeiten können, während die Zentrierleisten den koaxialen Verlauf des zweiten Honabschnitts zur Statoröffnung sicherstellen.

Der Stator umfasst gestapelte Bleche, zwischen denen sich Isolationsmaterial befindet. Bei spanender Bearbeitung der Innenfläche des Stators können Grate entstehen, welche die benachbarten Bleche kontaktieren können. Die Funktion des Stators erfordert jedoch eine Vermeidung der Kontaktierung der einzelnen Bleche, um so die Bildung von Wirbelströmen zu vermeiden. Daher besteht das Erfordernis weitgehender Gratfreiheit an den Blechkanten auf der Innenseite des Stators. Dies wird durch die oben beschriebene Honbearbeitung bzw. oben beschriebenen Honbearbeitungen erreicht. Auch die Bearbeitung der einzelnen Bleche auf einheitlichen Durchmesser und die Entfernung von Lackresten an der gewölbten Innenfläche des Stators wird hierdurch erreicht.

Durch das Honen der Statoröffnung wird eine hohe Oberflächengüte und Rundheit der Statoröffnung erreicht, außerdem wird durch das erfindungsgemäße Verfahren sichergestellt, dass die Lageröffnung koaxial zur Statoröffnung ausgerichtet ist und entsprechend der Rotor koaxial zum Stator ausgerichtet werden kann, sodass eine minimale Spaltweite zwischen Rotor und Stator erreicht werden kann. Hierdurch kann ein entsprechend bearbeiteter elektromechanischer Wandler effizient ausgebildet werden.

Mit Minimierung der Spaltweite nimmt die elektrische Feldstärke und somit der Wirkungsgrad des elektromechanischen Wandlers zu und es wird eine hohe Laufruhe des elektromechanischen Wandlers erreicht.

Optional ist, wenn der Stator während dem Honen der Statoröffnung mit einem Gehäuseabschnitt, der die Lageröffnung umfasst, verbunden ist. Der Stator kann also während der Bearbeitung der Statoröffnung bereits ins Gehäuse eingesetzt bzw. eingepresst sein. Die Honbearbeitung der Statoröffnung kann dabei, bspw. zeitgleich mit der Bearbeitung der Lageröffnung durchgeführt werden.

Optional ist, wenn der Stator während dem Honen der Statoröffnung mit einem Gehäuseabschnitt, der die Lageröffnung umfasst, unverbunden ist. Der Stator kann dabei einzeln gehandhabt werden und erst nach Abschluss der Honbearbeitung in das Gehäuse eingesetzt werden. Hierdurch kann der Verfahrensschritt der Honbearbeitung des Stators auf einer herkömmlichen Honmaschine mit einer herkömmlichen Honahle durchgeführt werden.

Optional ist, wenn die Statoröffnung gehont wird, bevor die Lageröffnung bearbeitet, vorzugsweise gehont, wird. Hierdurch kann zur Honbearbeitung der Statoröffnung eine herkömmliche Honahle verwendet werden.

Optional ist, wenn zeitgleich das Honen der Statoröffnung und die Bearbeitung der Lageröffnung erfolgt, vorzugsweise wobei die Lageröffnung gehont wird, insbesondere wobei die Statoröffnung und die Lageröffnung zeitgleich unter Verwendung eines Stufenhonwerkzeugs mit zwei voneinander getrennten Honabschnitten erfolgt. Hierdurch kann die Taktzeit bei der Bearbeitung reduziert werden. Insbesondere bei gleichzeitiger Honbearbeitung der Lageröffnung und der Statoröffnung kann das erfindungsgemäße Verfahren hierdurch besonders zeiteffizient durchgeführt werden.

Optional ist, wenn das Verfahren nach dem Honen der Statoröffnung und dem Bearbeiten der ersten Lageröffnung, ein Bearbeiten, vorzugsweise Honen, einer zweiten Lageröffnung umfasst, wobei ein Werkzeug zur Bearbeitung der zweiten Lageröffnung während der Bearbeitung der zweiten Lageröffnung über eine Zentriereinrichtung, die in die Statoröffnung oder die erste Lageröffnung eingreift, koaxial zu der Statoröffnung oder der ersten Lageröffnung ausgerichtet ist. Der Stator des elektromechanischen Wandlers kann dann in zwei Lageröffnungen gelagert werden, die beide koaxial zur Statoröffnung ausgerichtet sind. Besonders einfach lässt sich diese Variante des erfindungsgemäßen Verfahrens implementieren, wenn ein Honwerkzeug verwendet wird, das einen Zentrierabschnitt umfasst, der in die erste Lageröffnung eingeführt ist und einen Honabschnitt, der in die zweite Lageröffnung eingeführt ist. Der Zentrierabschnitt kann dabei über Zentrierleisten gegenüber der ersten Lageröffnung ausgerichtet werden und ist mechanisch derart mit dem Honabschnitt gekoppelt, dass er diesen koaxial zur ersten Lageröffnung ausrichtet, sodass die zweite Lageröffnung durch die Honbearbeitung koaxial zur ersten Lageröffnung ausgerichtet wird. Nach Abschluss der eben beschriebenen Verfahrensvariante sind dann die Statoröffnung und beide Lageröffnungen koaxial zueinander ausgerichtet und weisen eine hohe Oberflächengüte und Rundheit auf.

Optional ist, wenn die Bearbeitung der ersten Lageröffnung und ggf. der zweiten Lageröffnung wenigstens einen der Bearbeitungsschritte Honen, Feinbohren und Reiben umfasst. Die genannten Verfahren ermöglichen eine ausreichende Beeinflussung der Lage der Lageröffnung, um eine koaxiale Ausrichtung sicherzustellen.

Optional ist, wenn das Honen der Statoröffnung unter Verwendung von Honleisten mit Diamant als Schneidmaterial erfolgt und/oder wenn das Honen der Statoröffnung unter Verwendung von Honleisten erfolgt, die ein Schneidmaterial mit einer mittleren Korngröße (FEPA Standard für Diamant-Mikrokörnungsgrößen (11.1977, Kap.2.1): "Die Korngröße ist definiert durch Messgrößen von Messungen am vergrößerten Bild des Einzelkornes, wie es im Mikroskop gesehen wird. Die Korngröße wird durch den Durchmesser des kleinsten Kreises bestimmt, der das mikroskopische Abbild vollkommen umschließt.") aufweisen, die kleiner ist als die Dicke der Bleche des Stators, und/oder wenn das Honen der Statoröffnung unter Verwendung von Honleisten erfolgt, die eine Schneidmittelkonzentration von höchstens 20 Vol%, insbesondere 17,5 Vol%, insbesondere 15 Vol%, insbesondere 12,5 Vol%, aufweisen. Diamant eignet sich besonders gut als Schneidmaterial für die Honleisten bei der Bearbeitung des Stators, da dieses Schneidmittel besonders hart ist und eine Brückenbildung zwischen den Blechen des Stators verhindert. Die Verwendung eines Schneidmaterials mit einer mittleren Korngröße, die kleiner ist als die Dicke der Bleche wirkt ebenso einer Brückenbildung zwischen den Blechen des Stators entgegen. Durch die oben genannten Konzentrationen an Schneidmittel wird sichergestellt, dass stets scharfes Schneidmaterial an der Oberfläche der Honleisten vorhanden ist, was sich ebenso positiv auf die Unterbindung einer Brückenbildung zwischen den Blechen des Stators auswirkt.

Optional ist, wenn das Honen der Statoröffnung unter Verwendung von Honleisten mit cBN (Kubisch kristallines Bornitrid) als Schneidmaterial erfolgt. Denkbar ist auch die Verwendung von Honleisten mit konventionellen Schneidstoffen wie Siliciumkarbid und/oder Korund.

Optional ist, wenn das Honen der Statoröffnung mit einem Honwinkel von weniger als 30° erfolgt. Hierdurch wird einer Brückenbildung zwischen den Blechen des Stators entgegengewirkt. Durch den angegebenen Bereich der Honwinkel wird sichergestellt, dass die Schnittbewegung mit geringer Axialkomponente überwiegend in Umfangsrichtung verläuft und somit die Honbearbeitung überwiegend in Richtung der Bleche des Stators erfolgt, sodass Brückenbildung zwischen den Blechen des Stators effektiv verhindert wird. Der Honwinkel ist dabei der Winkel zwischen den Vektoren der Schnittgeschwindigkeit bei jeweils umgekehrter axialer Bewegung. Die Horizontale, die dem Verlauf der Bleche des Stators entspricht und der Richtung der rein rotatorischen Bewegung des Honwerkzeugs entspricht, stellt dabei die Winkelhalbierende des Honwinkels dar. Der Honwinkel ist an fertig gehonten Bauteilen an den entstehenden Honschnittspuren, die in einem für das Honen typischen Kreuzschnittmuster verlaufen, sichtbar.

Optional wird bei dem erfindungsgemäßen Verfahren eine Zentriereinrichtung verwendet wird, die radial zustellbar ausgeführt ist.

Eine Bearbeitungsmaschine kann entsprechend eingerichtet und ausgebildet werden, um die Statoröffnung eines Stators und die Lageröffnung eines elektromechanischen Wandlers gemäß einer der vorangehend beschriebenen Varianten des erfindungsgemäßen Verfahrens zu bearbeiten. Insbesondere kann eine derartige Bearbeitungsmaschine ein Werkzeug zur Bearbeitung der Lageröffnung umfassen, das eine Zentriereinrichtung umfasst, über die das Werkzeug zur Bearbeitung der Lageröffnung während der Bearbeitung der Lageröffnung in die Statoröffnung eingreifen kann und das Werkzeug koaxial zu der Statoröffnung ausrichten kann.

Optional weist die Bearbeitungsmaschine eine Zentriereinrichtung auf, die radial zustellbar ausgeführt ist.

Bevorzugterweise kennzeichnet sich die Bearbeitungsmaschine dadurch, dass sie eine Werkstückaufnahme und eine Montageeinrichtung umfasst, wobei die Werkstückaufnahme zur Aufnahme eines ersten Gehäuseabschnitts eines Gehäuses eines elektromechanischen Wandlers, der eine erste Lageröffnung umfasst, ausgebildet ist, und wobei die Montageeinrichtung ausgebildet ist, um einen zweiten Gehäuseabschnitt eines Gehäuses eines elektromechanischen Wandlers, der die zweite Lageröffnung umfasst, an den ersten Gehäuseabschnitt anzusetzen. Unter anzusetzen ist dabei zu verstehen, dass der zweite Gehäuseabschnitt in einer vorgesehenen Montageposition an dem ersten Gehäuseabschnitt platziert wird. Vorzugsweise umfasst die Bearbeitungsmaschine auch eine Verbindungseinrichtung, die ausgebildet ist, um den ersten Gehäuseabschnitt mit dem zweiten Gehäuseabschnitt zu verbinden, beispielsweise zu verschweißen, zu verkleben oder ineinander zu schrauben.

Vorzugsweise weist die Bearbeitungsmaschine einen Rundtisch auf. Der Rundtisch kann beispielsweise dazu ausgebildet sein, um den elektromechanischen Wandler von einer Bearbeitungsstation zur nächsten zu transportieren. Beispielsweise können das Werkzeug zur Bearbeitung der ersten Lageröffnung und das Werkzeug zur Bearbeitung der zweiten Lageröffnung, vorzugsweise und das Honwerkzeug zur Bearbeitung Statoröffnung, an unterschiedlichen Bearbeitungsstationen der Bearbeitungsmaschine angeordnet sein. Die oben genannte Montageeinrichtung kann an einer der Bearbeitungsstationen, an denen das Honwerkzeug zur Bearbeitung der Statoröffnung oder eines der Werkzeuge zur Bearbeitung der ersten oder der zweiten Lageröffnung angeordnet ist, angeordnet sein. Die Montageeinrichtung kann jedoch auch an einer separaten weiteren Bearbeitungsstation angeordnet sein.

Der Rundtisch kann jedoch auch dazu ausgebildet sein, um an einer Bearbeitungsstation unterschiedliche Werkzeuge gegenüber dem elektromechanischen Wandlern in eine Bearbeitungsstellung zu bringen. Beispielsweise kann der Rundtisch das Honwerkzeug zur Bearbeitung der Statoröffnung und/oder eines oder beide der Werkzeuge zur Bearbeitung der ersten oder der zweiten Lageröffnung und/oder die Montageeinrichtung in eine Bearbeitungsstellung gegenüber dem elektromechanischen Wandler bewegen.

Die Bearbeitungsmaschine kann auch eine Werkstückmanipulationseinrichtung umfassen, die ausgebildet ist, um das Gehäuse des elektromechanischen Wandlers von einer ersten Bearbeitungsstellung, in der die erste Lageröffnung zur Bearbeitung ausgerichtet ist, in eine zweite Bearbeitungsstellung zu bewegen, vorzugsweise zu rotieren, in der die zweite Lageröffnung zur Bearbeitung ausgerichtet ist.

Vorteilhafterweise kann die Bearbeitungsmaschine eine Werkstückaufnahme aufweisen, die ausgebildet ist, um einen elektromechanischen Wandler aufzunehmen und den in ihr aufgenommenen elektromechanischen Wandler das Gehäuse des elektromechanischen Wandlers von einer ersten Bearbeitungsstellung, in der die erste Lageröffnung zur Bearbeitung ausgerichtet ist, in eine zweite Bearbeitungsstellung zu bewegen, vorzugsweise zu rotieren, in der die zweite Lageröffnung zur Bearbeitung ausgerichtet ist. Die Werkstückaufnahme bildet in diesem Fall quasi eine Werkstückmanipulationseinrichtung.

Die Bearbeitungsmaschine kann auch derart ausgebildet sein, dass das Werkzeug zur Bearbeitung der ersten Lageröffnung auf einer anderen Seite des elektromechanischen Wandlers angeordnet ist als das Werkzeug zur Bearbeitung der zweiten Lageröffnung, wobei die das Werkzeug zur Bearbeitung der ersten Lageröffnung die erste Lageröffnung vorzugsweise von einer anderen Seite bearbeitet als das Werkzeug zur Bearbeitung der zweiten Lageröffnung die zweite Lageröffnung. Beispielsweise kann das Werkzeug zur Bearbeitung der ersten Lageröffnung in der Bearbeitungsmaschine oberhalb des elektromechanischen Wandlers angeordnet sein und die erste Lageröffnung von oben her bearbeiten und das Werkzeug zur Bearbeitung der zweiten Lageröffnung kann unterhalb des elektromechanischen Wandlers angeordnet sein und die zweite Lageröffnung von unten her bearbeiten.

Entsprechend kann ein elektromechanischer Wandler mit einem Gehäuse in dem der Stator des Wandlers aufgenommen ist, vorgesehen sein, wobei das Gehäuse wenigstens eine Lageröffnung, vorzugsweise zwei Lageröffnungen umfasst, wobei die Lageröffnung bzw. Lageröffnungen der Aufnahme eines Rotors bzw. der Rotorwelle des elektromechanischen Wandlers dienen, wobei die Statoröffnung und eine Lageröffnung ggf. zwei Lageröffnungen gemäß einer der vorangehend beschriebenen Varianten des erfindungsgemäßen Verfahrens bearbeitet sind. Ein derartiger elektromechanischer Wandler kann einen besonders hohen Wirkungsgrad aufweisen, da seine Spaltweite minimal ausgebildet sein kann.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 einen elektromechanischen Wandler in einer schematischen Schnittdarstellung;
Figur 2 einen Stator in einer schematischen Schnittdarstellung,
Figur 3 einen weiteren Stator in einer perspektivischen Darstellung;
Figur 4 verschiedene Schritte eines erfindungsgemäßen Verfahrens;
Figur 5 verschiedene Schritte eines alternativen erfindungsgemäßen Verfahrens;
Figur 6 verschiedene Schritte eines alternativen erfindungsgemäßen Verfahrens;
Figur 7 eine Bearbeitungsstation einer Bearbeitungsmaschine;
Figur 8 eine weitere Bearbeitungsstation der Bearbeitungsmaschine;
Figur 9 eine Drehung des elektromechanischen Wandlers in der Bearbeitungsmaschine mittels einer Werkstückmanipulationseinrichtung der Bearbeitungsmaschine;
Figur 10 eine weitere Bearbeitungsstation der Bearbeitungsmaschine; und
Figur 11 die Bearbeitungsmaschine in schematischer Darstellung.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

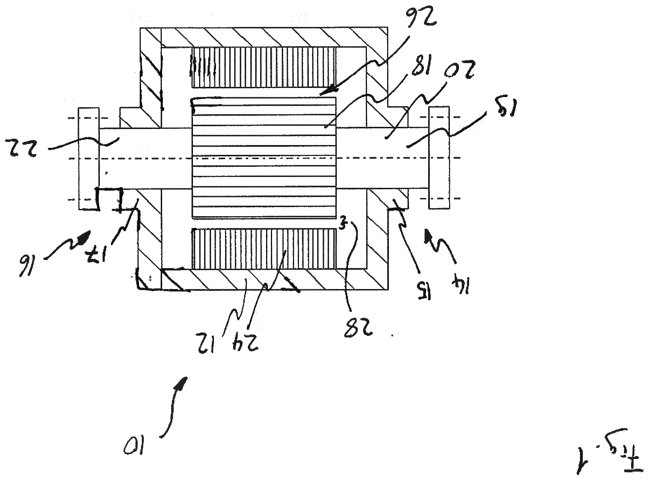

Figur 1 zeigt eine schematische Schnittdarstellung eines elektromechanischen Wandlers 10. Der elektromechanische Wandler 10 umfasst ein Gehäuse 12. Das Gehäuse 12 umfasst eine erste Lageröffnung 14 in einem ersten Gehäuseabschnitt 15 und eine zweite Lageröffnung 16 in einem zweiten Gehäuseabschnitt 17. In dem Gehäuse 12 ist ein Rotor 18 angeordnet. Der Rotor 18 ist auf einer Rotorwelle 19 angeordnet. In den Lageröffnungen 14, 16 ist die Rotorwelle 19 aufgenommen. Die Rotorwelle 19 umfasst einen ersten Wellenabschnitt 20 und einen zweiten Wellenabschnitt 22, wobei die Wellenabschnitte 20, 22 in den jeweiligen Lageröffnungen 14, 16 aufgenommen und rotierbar gelagert sind.

Um den Rotor 18 herum ist in dem Gehäuse 12 ein Stator 24 des elektromechanischen Wandlers 10 angeordnet. Mit anderen Worten, der Rotor 18 ist in einer Statoröffnung 26 angeordnet.

Eine Spaltweite zwischen Rotor 18 und Stator 24 ist vorliegend übertrieben dargestellt und trägt das Bezugszeichen 28.

Die Statoröffnung 26 ist vorliegend gehont, gemäß einem der nachfolgend beschriebenen Verfahren. Die Lageröffnungen 14, 16 sind gemäß einem der nachfolgend beschriebenen Verfahren bearbeitet.

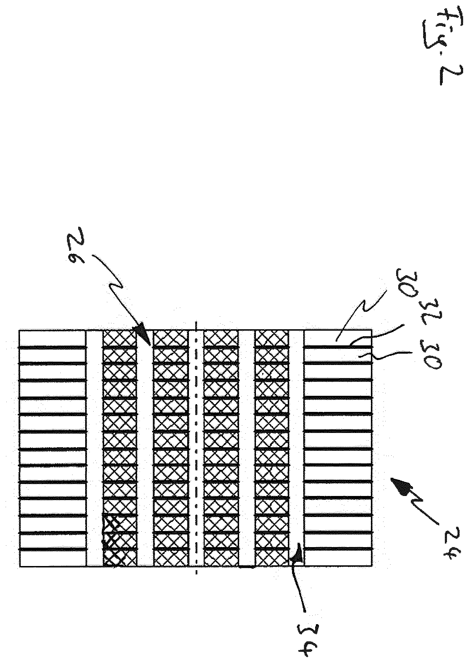

Figur 2 zeigt den Stator 24 in der Perspektive von Figur 1 einzeln in einer Schnittdarstellung. Einzelne Bleche des Stators 24 tragen jeweils das Bezugszeichen 30 und sind jeweils durch eine Isolationsschicht 32 voneinander getrennt.

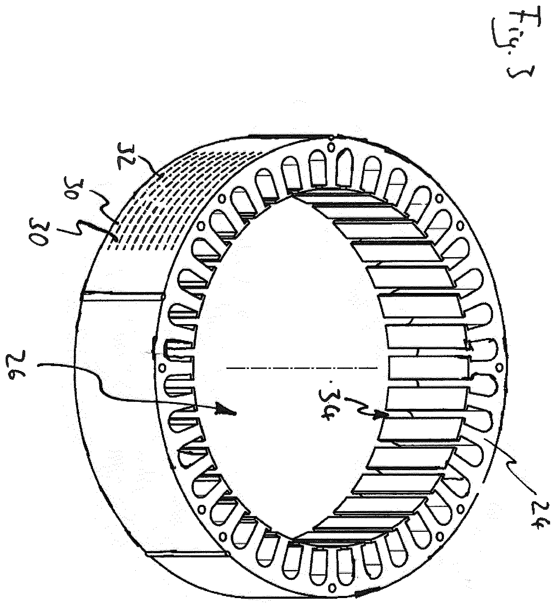

Die Statoröffnung 26 weist mehrere Öffnungsunterbrechungen 34 auf. Eine alternative Ausführungsform mit mehr Öffnungsunterbrechungen 34 des Stators 24 ist in Figur 3 dargestellt, wobei Figur 3 eine perspektivische Darstellung eines derartigen Stators 24 zeigt.

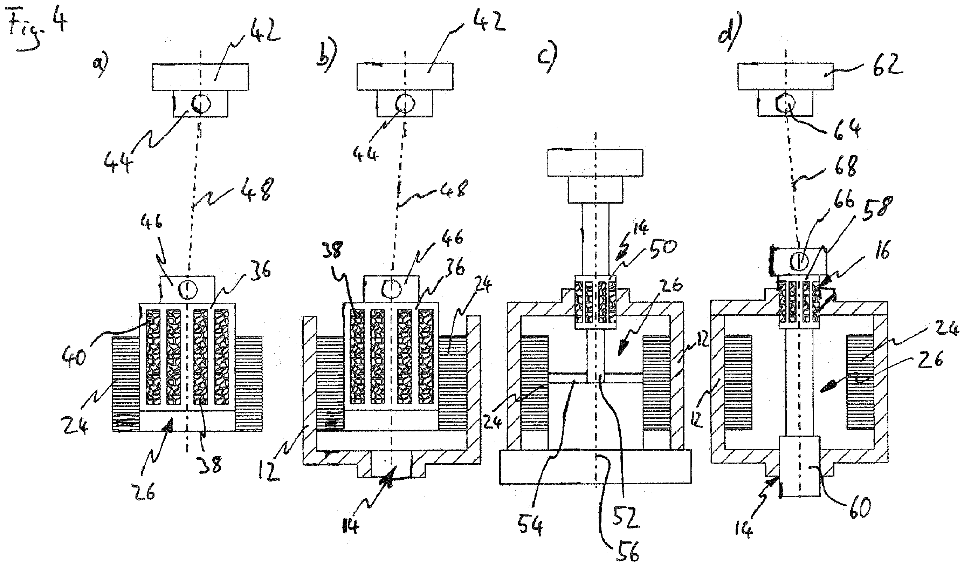

In Figur 4 ist eine Illustration eines erfindungsgemäßen Verfahrens gezeigt.

Figur 4 a) zeigt einen ersten Schritt eines erfindungsgemäßen Verfahrens.

In diesem ersten Schritt wird bei der vorliegenden Ausführungsform des Verfahrens der Stator 24 bzw. die Statoröffnung 26 bearbeitet. Der Stator 24 ist dabei bei der Variante von Figur 4a) unverbunden mit einem Gehäuse 12. Der Stator ist in diesem Fall mit dem ersten Gehäuseabschnitt 15 unverbunden. Alternativ dazu kann der Stator 24 in dem Gehäuse 12 angeordnet bzw. mit diesem verbunden, insbesondere in dieses eingepresst, sein. Der Stator ist in diesem Fall mit dem ersten Gehäuseabschnitt 15 verbunden. Die zuletzt beschriebene Variante ist in Figur 4b) gezeigt. Die Figuren 4a) und 4b) zeigen also Alternativen des ersten Schritts des Verfahrens. In diesem ersten Schritt wird die Statoröffnung 26 mit einem Honwerkzeug 36 gehont. Das Honwerkzeug 36 weist vorliegend mehrere Honleisten 38 auf.

Das Honen der Statoröffnung 26 kann unter Verwendung von Honleisten 38 mit Diamant als Schneidmaterial 40 erfolgen. Das Honen der Statoröffnung 26 kann außerdem oder zusätzlich unter Verwendung von Honleisten 38 erfolgen, die Schneidmaterial 40 mit einer mittleren Korngröße aufweisen, die kleiner ist als die Dicke der Bleche 30 des Stators 24. Das Honen der Statoröffnung 24 kann außerdem oder zusätzlich unter Verwendung von Honleisten 38 erfolgen, die eine Schneidmittelkonzentration von höchstens 20 Vol%, insbesondere 17,5 Vol%, insbesondere 15 Vol%, insbesondere 12,5 Vol%, aufweisen.

Das Honen der Statoröffnung 24 kann außerdem oder zusätzlich mit einem Honwinkel von weniger als 30° erfolgen.

Das Honwerkzeug 36 ist mit einer Honspindel 42 verbunden. Die Verbindung zur Honspindel 42 ist über eine spindelseitiges Gelenk 44 und ein werkzeugseitiges Gelenk 46 sowie eine Gelenksstange 48 realisiert. Durch die gelenkige Verbindung kann das Honwerkzeug 36 der axialen Ausrichtung der Statoröffnung 26 folgen und lediglich dessen Oberfläche bearbeiten ohne die Achslage wesentlich zu beeinflussen. Die Gelenkstange 48 bietet die notwendigen Freiheitsgrade zum Ausrichten von Werkzeug 36 zur Statoröffnung 26 und ermöglicht ein achsgleiches Bearbeiten.

Bei der in Figur 4 gezeigten Verfahrensvariante wird nach Abschluss der Bearbeitung bzw. Honbearbeitung der Statoröffnung 26 die erste Lageröffnung 14 bearbeitet.

Bei der in Figur 4 gezeigten Variante des erfindungsgemäßen Verfahrens wird die erste Lageröffnung 14 ebenfalls gehont. Im Sinne der vorliegenden Erfindung sind jedoch auch andere Bearbeitungsprozesse.

Ein Werkzeug 50 zur Bearbeitung der Lageröffnung 14, das vorliegend als Honwerkzeug 50 ausgebildet ist, weist eine Zentriereinrichtung 52, die vorliegend einen Zentrierdorn 54 umfasst, auf.

Während der Bearbeitung der ersten Lageröffnung 14 ist das Werkzeug 50 zur Bearbeitung der Lageröffnung 14 über die Zentriereinrichtung 52, die in die Statoröffnung 26 eingreift, koaxial zu der Statoröffnung 26 ausgerichtet. Was durch die gemeinsame Mittelachse 56 der Statoröffnung 26 und der Lageröffnung 14 illustriert ist. Das Werkzeug 50 ist quasi durch die Zentriereinrichtung 52 in seiner Axiallage koaxial zur Statoröffnung 26 ausgerichtet und bearbeitet die Lageröffnung 14 derart, dass deren Mittelachse auf die Mittelachse der Statoröffnung 26 fällt.

Im Anschluss an den Verfahrensschritt aus Figur 4c) kann optional die zweite Lageröffnung 16 gemäß dem Verfahrensschritt aus Figur 4d) bearbeitet werden.

Das Verfahren umfasst in diesem Fall nach dem Honen der Statoröffnung 26 und dem Bearbeiten bzw. Honen der ersten Lageröffnung 14, das Bearbeiten, vorzugsweise Honen, der zweiten Lageröffnung 16. Ein Werkzeug 58, das vorliegend als Honwerkzeug 58 ausgebildet ist, zur Bearbeitung der zweiten Lageröffnung 16 ist dabei während der Bearbeitung der zweiten Lageröffnung 16 über eine Zentriereinrichtung 60, die in die erste Lageröffnung 14 eingreift, koaxial zu der ersten Lageröffnung 14 ausgerichtet. Durch die koaxiale Ausrichtung zu der bereits bearbeiteten ersten Lageröffnung 14 ist das Werkzeug 58 auch koaxial zur Statoröffnung 26 ausgerichtet.

Das Werkzeug 58 ist quasi durch die Zentriereinrichtung 60 in seiner Axiallage koaxial zur ersten Lageröffnung 14 bzw. Statoröffnung 26 ausgerichtet und bearbeitet die zweite Lageröffnung 16 derart, dass deren Mittelachse auf die Mittelachse der Statoröffnung 26 bzw. der ersten Lageröffnung 14 fällt. Das Werkzeug 58 ist dabei ein gelenkig gelagertes Honwerkzeug 58. Dadurch ist eine gleichachsige Bearbeitung möglich. Das bedeutet, das zwischen der Lageröffnung 14 und dem Werkzeug 58 mit der Zentriereinrichtung 60 Achsgleichheit besteht.

Eine Zentriereinrichtung 60 kann vorteilhaft radial zustellbar ausgeführt sein, um ein spielfreies Führen zu ermöglichen.

Das Honwerkzeug 58 zur Bearbeitung der zweiten Lageröffnung 16 ist mit einer Honspindel 62 verbunden. Die Verbindung zur Honspindel 62 ist über eine spindelseitiges Gelenk 64 und ein werkzeugseitiges Gelenk 66 sowie eine Gelenksstange 68 realisiert.

Bei den in Figur 4 illustrierten Verfahrensvarianten ist also das Werkzeug 50 zur Bearbeitung der ersten Lageröffnung 14 über die Zentriereinrichtung 52, die in die Statoröffnung 26 eingreift, koaxial zu der Statoröffnung 26 ausgerichtet (Figur 4c) und das Werkzeug 58 zur Bearbeitung der zweiten Lageröffnung 16 ist über die Zentriereinrichtung 60, die in die erste Lageröffnung 14 eingreift, koaxial zu der ersten Lageröffnung 14 ausgerichtet (Figur 4d). Anstatt der in Figur 4d) gezeigten Variante ist es jedoch auch möglich, das Werkzeug 58 zur Bearbeitung der zweiten Lageröffnung 16 über die Zentriereinrichtung 60 koaxial zu der Statoröffnung 26 auszurichten, in dem die Zentriereinrichtung 60 in die Statoröffnung 26 eingreift. Um den in Figur 4 illustrierten Geometrieverhältnissen gerecht zu werden kann hierzu beispielsweise die Zentriereinrichtung 60 expandierbar ausgebildet sein.

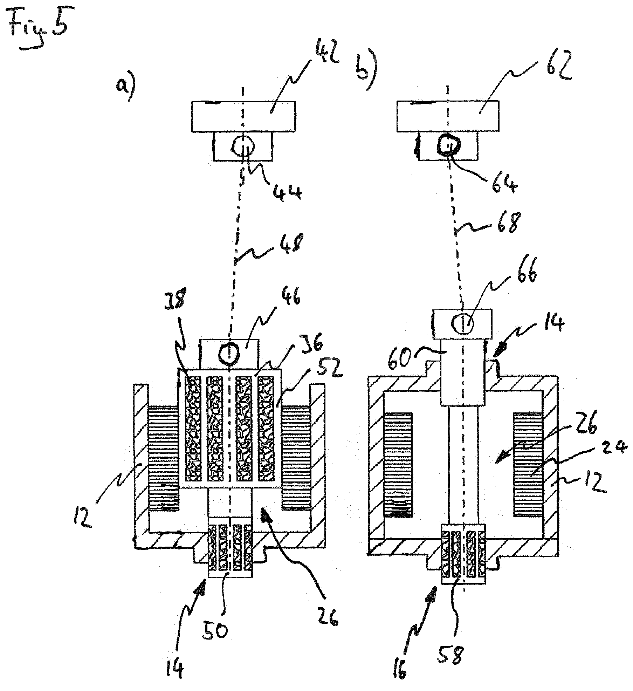

Fig. 5 zeigt eine alternative Variante des erfindungsgemäßen Verfahrens. Bei der Variante von Figur 5 bzw. Figur 5a) ist das Honwerkzeug 36 zur Bearbeitung der Statoröffnung 26 starr mit dem Werkzeug 50 zur Bearbeitung der ersten Lageröffnung 14 verbunden. Das Honwerkzeug 36 und das Werkzeug 50, das vorliegend ebenfalls als Honwerkzeug ausgebildet ist, bilden gemeinsam ein Stufenhonwerkzeug 51, wobei das Honwerkzeug 36 und das Werkzeug 50 jeweils einen Honabschnitt des Stufenhonwerkzeugs 51 bilden. Das Honwerkzeug 36 zur Bearbeitung der Statoröffnung 26 bildet bei dem in Figur 5a) gezeigten Verfahrensschritt gleichzeitig eine Zentriereinrichtung 52, die in die Statoröffnung 26 eingreift und das Werkzeug 50 zur Bearbeitung der ersten Lageröffnung 14 koaxial zu der Statoröffnung 26 ausrichtet. Bei dem in Figur 5a) illustrierten Verfahrensschritt erfolgen das Honen der Statoröffnung 26 und die Bearbeitung, vorliegend das Honen, der ersten Lageröffnung 14 gleichzeitig. (Bei dem in Figur 5a) zeigten Vorgang kann auch das Werkzeug 50 gleichzeitig als eine Zentriereinrichtung gesehen werden, die in die erste Lageröffnung 14 eingreift und die das Honwerkzeug 36 zur Bearbeitung der Statoröffnung 26 koaxial zu der ersten Lageröffnung 14 ausrichtet).

Figur 5b) zeigt einen optionalen weiteren Verfahrensschritt. Wird der in Figur 5b) gezeigte Verfahrensschritt durchgeführt, so umfasst das Verfahren nach dem Honen der Statoröffnung 26 und der ersten Lageröffnung 14, das Bearbeiten, vorzugsweise Honen, der zweiten Lageröffnung 16. Das Werkzeug 58, das vorliegend als Honwerkzeug 58 ausgebildet ist, zur Bearbeitung der zweiten Lageröffnung 16 ist dabei während der Bearbeitung der zweiten Lageröffnung 16 über die Zentriereinrichtung 60, die in die erste Lageröffnung 14 eingreift, koaxial zu der ersten Lageröffnung 14 ausgerichtet. Durch die koaxiale Ausrichtung zu der bereits bearbeiteten ersten Lageröffnung 14 ist das Werkzeug 58 auch koaxial zur Statoröffnung 26 ausgerichtet.

Das Werkzeug 58 ist quasi durch die Zentriereinrichtung 60 in seiner Axiallage koaxial zur ersten Lageröffnung 14 bzw. Statoröffnung 26 ausgerichtet und bearbeitet die zweite Lageröffnung 16 derart, dass deren Mittelachse auf die Mittelachse der Statoröffnung 26 bzw. der ersten Lageröffnung 14 fällt. Das Werkzeug 58 ist gelenkig gelagert. Das Honwerkzeug 58 zur Bearbeitung der zweiten Lageröffnung 16 ist mit einer Honspindel 62 verbunden. Die Verbindung zur Honspindel 62 ist über eine spindelseitiges Gelenk 64 und ein werkzeugseitiges Gelenk 66 sowie eine Gelenksstange 68 realisiert.

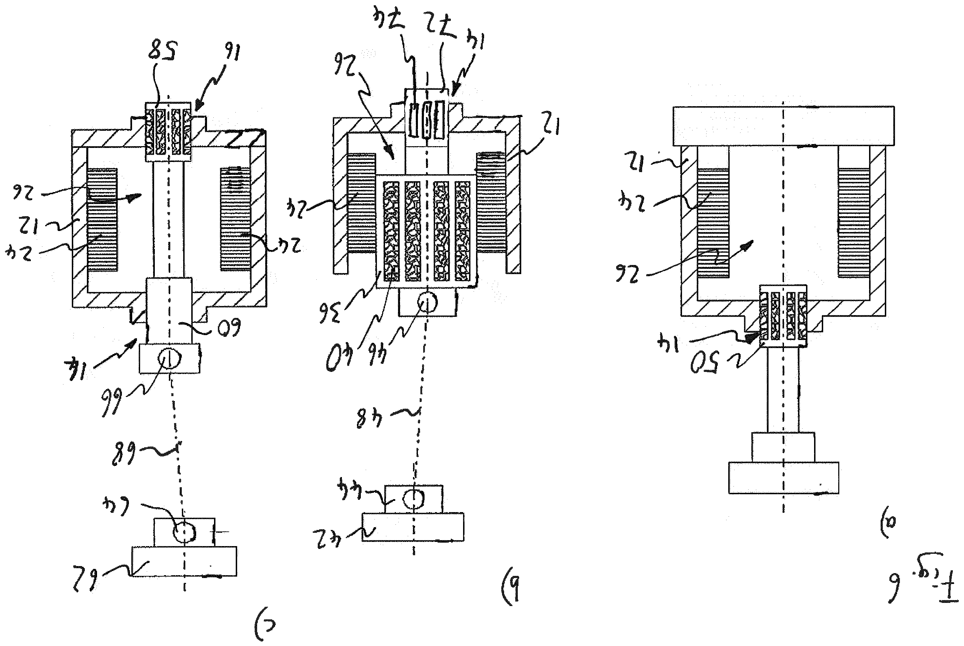

Fig. 6 zeigt eine alternative Variante des erfindungsgemäßen Verfahrens. Bei der Variante von Figur 6 wird zunächst die erste Lageröffnung 14 bearbeitet, vorliegend gehont.

In einem nächsten Schritt, der in Figur 5b) gezeigt ist, wird die Statoröffnung 26 gehont. Das Honwerkzeug 36 zur Bearbeitung der Statoröffnung 26 ist bei dieser Variante des Verfahrens starr mit einer Zentriereinrichtung 72 verbunden. Die Zentriereinrichtung 72 umfasst mehrere Zentrierleisten 74, die in die bereits bearbeitete erste Lageröffnung 14 eingreifen und das Honwerkzeug 36 koaxial zu der ersten Lageröffnung 14 ausrichten.

Figur 6c) zeigt einen optionalen weiteren Verfahrensschritt der dem Verfahrensschritt von Figur 5b) entspricht.

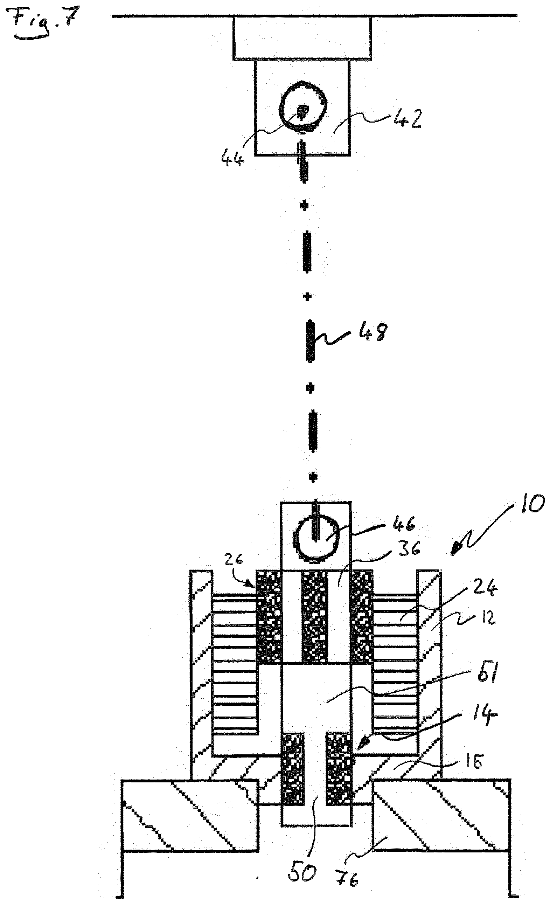

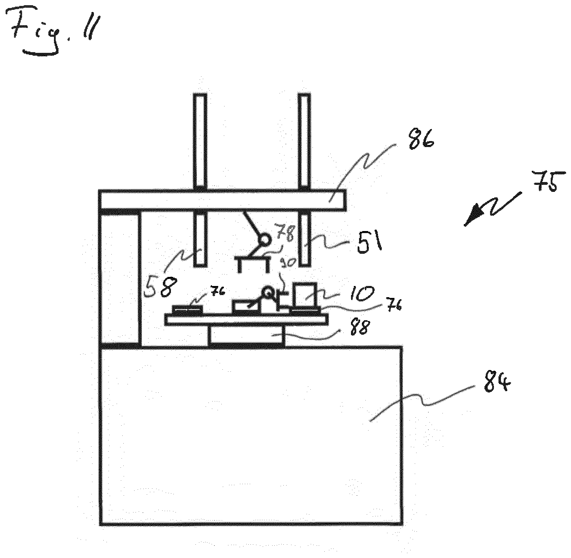

In den Figuren 7-10 sind verschiedene Arbeitsstationen einer Bearbeitungsmaschine 75 dargestellt. Die Bearbeitungsmaschine 75 an sich ist schematisch in Figur 11 gezeigt, wobei die Bearbeitungsmaschine 75 zur Durchführung des erfindungsgemäßen Verfahrens ausgebildet und eingerichtet ist. Die Bearbeitungsmaschine 75 umfasst eine Maschinenbasis 84 und ein Maschinenoberteil 86. Auf der Maschinenbasis 84 ist ein Rundtisch 88 als maschineninternes Transfersystem angeordnet. Der Rundtisch 88 umfasst mehrere Werkstückaufnahmen 76, die zentrisch um eine Drehachse des Rundtischs 88 angeordnet sind. Der Rundtisch 88 bewegt über eine Drehbewegung den in der Werkstückaufnahme 76 aufgenommenen elektromechanischen Wandler 10 von einer Bearbeitungsstation zur nächsten.

Generell kann die Bearbeitungsmaschine 75 einen Rundtisch 88 als maschineninternes Transfersystem aufweisen oder als Lineartransfermaschine ausgebildet sein. Beispielsweise können die elektromechanischen Wandler 10 über ein Linearförderband durch die Bearbeitungsmaschine 75 bewegt werden. Denkbar ist auch ein robotergestütztes maschineninternes Transfersystem. Denkbar ist auch, dass die Bewegung der Werkstücke durch die Bearbeitungsmaschine 75 manuell erfolgt.

Bei der Bearbeitung eines elektromechanischen Wandlers 10 ist dieser in einer der Werkstückaufnahmen 76 aufgenommen und dadurch fixiert, vorzugsweise mechanisch verspannt. Die Bearbeitungsmaschine 75 ist vorliegend in Figur 7 zur Durchführung einer zeitgleichen Bearbeitung der Statoröffnung 26 und der ersten Lageröffnung 15 in einer Bearbeitungsstation eingerichtet dargestellt, entsprechend dem in Figur 5 illustrierten Verfahren. Hierzu umfasst die Bearbeitungsmaschine das Stufenhonwerkzeug 51. Die Bearbeitungsmaschine kann jedoch auch mit einem Honwerkzeug 36 zum Honen der Statoröffnung 26 und mit einem von diesem getrennten Werkzeug 50 zur Bearbeitung der Lageröffnung 14 ausgebildet sein. Vorzugsweise sind diese beiden Werkzeuge dann in unterschiedlichen Bearbeitungsstationen angeordnet.

Sie können jedoch auch in einer einzigen Bearbeitungsstation angeordnet sein und beispielsweise über einen Werkzeugwechsler jeweils in einer Bearbeitungsstellung zu dem elektromechanischen Wandler 10 positionierbar sein.

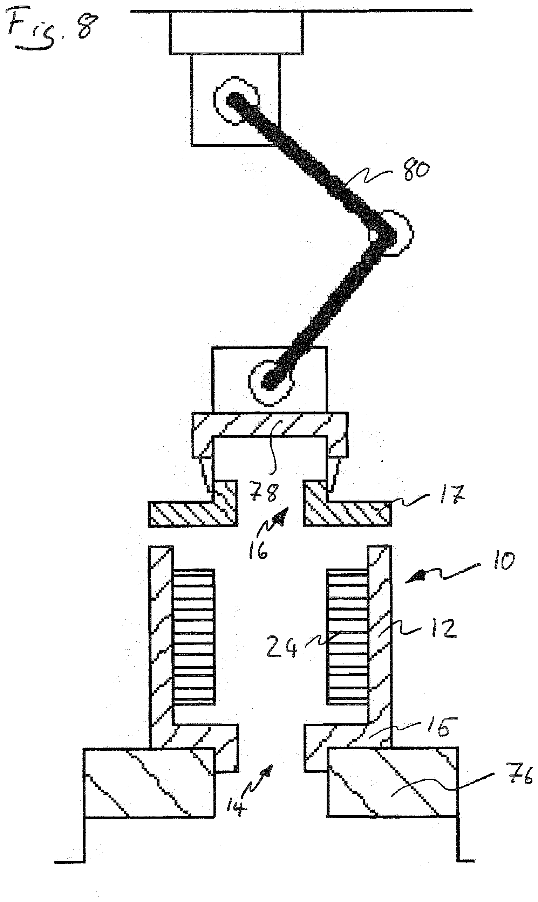

In Figur 8 ist eine weitere Bearbeitungsstation der Bearbeitungsmaschine gezeigt. In dieser Bearbeitungsstation ist eine Montageeinrichtung 78 angeordnet. Die Montageeinrichtung 78 ist vorliegend über einen gelenkigen Arm 80 flexibel bewegbar. In der Darstellung von Figur 8 setzt die Montageeinrichtung 78 den zweiten Gehäuseabschnitt 17 des Gehäuses 12 mit der zweiten Lageröffnung 16 an den ersten Gehäuseabschnitt 15 an. Im Anschluss an das Ansetzen des zweiten Gehäuseabschnitts 17 wird dieser mit dem ersten Gehäuseabschnitt 15 verbunden. Dieses Verbinden kann kraft-, form- und/oder stoffschlüssig erfolgen beispielsweise durch Verkleben, Verschweißen, Verlöten, Verklemmen, Vernieten und/oder Verschrauben.

Um das Gehäuse 12 bzw. den elektromechanischen Wandler 10 von einer Bearbeitungsstation zur nächsten zu bewegen weist die Bearbeitungsmaschine 75 den Rundtisch 88 auf. Andere Transfersysteme sind denkbar. Beispielsweise können das Werkzeug 50 zur Bearbeitung der ersten Lageröffnung 14, das Werkzeug 58 zur Bearbeitung der zweiten Lageröffnung 16 und das Honwerkzeug 36 zur Bearbeitung Statoröffnung 26, an unterschiedlichen Bearbeitungsstationen der Bearbeitungsmaschine 75 angeordnet sein. Die Montageeinrichtung 78 kann an einer separaten Bearbeitungsstation angeordnet sein.

Der Rundtisch 88 kann jedoch auch dazu ausgebildet sein, um an einer Bearbeitungsstation unterschiedliche Werkzeuge gegenüber einem elektromechanischen Wandler 10 in eine Bearbeitungsstellung zu bringen. Der elektromechanische Wandler 10 ist dann vorteilhafterweise unbeweglich in der Werkstückaufnahme 76 angeordnet. Der Rundtisch 88 ist dann vorteilhafterweise am Maschinenoberteil 86 angeordnet und rotiert die Werkzeuge ggü. dem elektromechanischen Wandler 10.

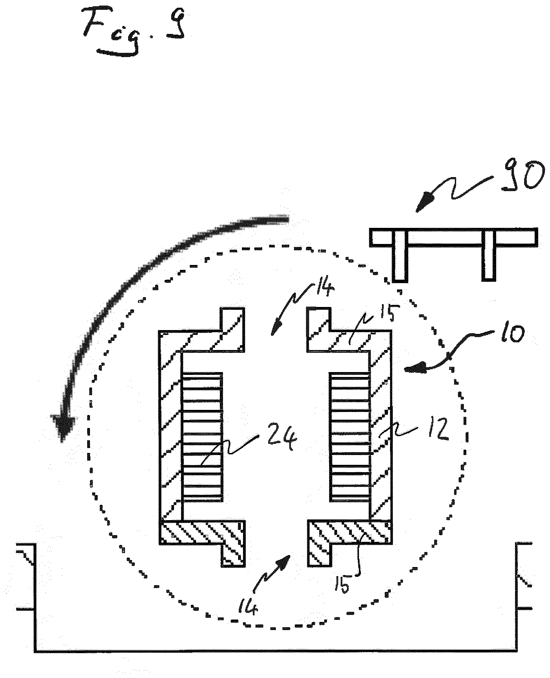

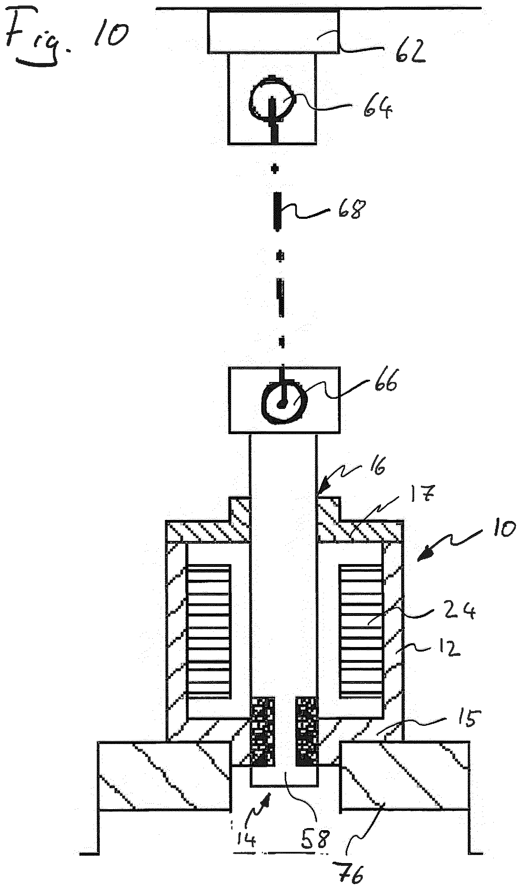

Die Bearbeitungsmaschine 75 kann auch eine Werkstückmanipulationseinrichtung 90 umfassen, die ausgebildet ist, um das Gehäuse 12 des elektromechanischen Wandlers 10 von einer ersten Bearbeitungsstellung (Figur 7 und 8), in der die erste Lageröffnung 14 zur Bearbeitung ausgerichtet ist, in eine zweite Bearbeitungsstellung (Figur 10) zu bewegen, vorzugsweise zu rotieren, in der die zweite Lageröffnung 16 zur Bearbeitung ausgerichtet ist. Vorzugsweise ist die Werkstückmanipulationseinrichtung 90 ausgebildet, um den elektromechanischen Wandler 10 um 180° drehen zu können. Eine derartige Bewegung beziehungsweise vorliegend Drehung ist in Figur 9 illustriert.

In Figur 10 ist eine weitere Bearbeitungsstation der Bearbeitungsmaschine gezeigt. In dieser Bearbeitungsstation bearbeitet das Werkzeug 58 zur Bearbeitung der zweiten Lageröffnung 16 die Lageröffnung 16.

Die Werkstückmanipulationseinrichtung 90 kann an einer eigenen Bearbeitungsstation vorgesehen sein oder, wie in Figur 11 gezeigt, zentral, so dass sie den elektromechanischen Wandler in wenigstens einer, vorzugsweise jeder der Bearbeitungsstationen der Bearbeitungsmaschine 75 von der einen Bearbeitungsstellung in die andere bewegen kann.

## Patentansprüche

1. Verfahren zum Bearbeiten einer Statoröffnung (26) eines Stators (24) und einer Lageröffnung (14) eines elektromechanischen Wandlers (10), insbesondere eines Elektromotors, wobei das Verfahren die Schritte umfasst, Honen der Statoröffnung (26) mit einem Honwerkzeug (36) und Bearbeiten, vorzugsweise Honen, der Lageröffnung (14), **dadurch gekennzeichnet, dass**
ein Werkzeug (50) zur Bearbeitung der Lageröffnung (14) während der Bearbeitung der Lageröffnung (14) über eine Zentriereinrichtung (52), die in die Statoröffnung (26) eingreift, koaxial zu der Statoröffnung (26) ausgerichtet ist,
oder dass
das Honwerkzeug (36) zum Honen der Statoröffnung (26) über eine Zentriereinrichtung (72), die in die Lageröffnung (14) eingreift, koaxial zu der Lageröffnung (14)ausgerichtet ist.

2. Verfahren nach Anspruch 1, **dadurch gekennzeichnet, dass** der Stator (24) während dem Honen der Statoröffnung (26) mit einem Gehäuseabschnitt (15), der die Lageröffnung (14) umfasst, verbunden ist.

3. Verfahren nach Anspruch 1, **dadurch gekennzeichnet, dass** der Stator (24) während dem Honen der Statoröffnung (26) mit einem Gehäuseabschnitt (15), der die Lageröffnung (14) umfasst, unverbunden ist.

4. Verfahren nach einem der voranstehenden Ansprüche, **dadurch gekennzeichnet, dass** die Statoröffnung (26) gehont wird, bevor die Lageröffnung (14) bearbeitet, vorzugsweise gehont, wird.

5. Verfahren nach einem der voranstehenden Ansprüche 1 oder 2, **dadurch gekennzeichnet, dass** zeitgleich das Honen der Statoröffnung (26) und die Bearbeitung der Lageröffnung (14) erfolgen, vorzugsweise wobei die Lageröffnung (14) gehont wird, insbesondere wobei die Statoröffnung (26) und die Lageröffnung (14) zeitgleich unter Verwendung eines Stufenhonwerkzeugs (51) mit zwei voneinander getrennten Honabschnitten (36, 50) erfolgt.

6. Verfahren nach einem der voranstehenden Ansprüche, **dadurch gekennzeichnet, dass** das Verfahren nach dem Honen der ersten Lageröffnung (14), vorzugsweise und der Statoröffnung (26), das Ansetzen eines zweiten Gehäuseabschnitts (17) mit einer zweiten Lageröffnung (16) an den ersten Gehäuseabschnitt (15), der die erste Lageröffnung (14) umfasst, umfasst.

7. Verfahren nach einem der voranstehenden Ansprüche, **dadurch gekennzeichnet, dass** das Verfahren nach dem Honen der Statoröffnung (26) und dem Bearbeiten der ersten Lageröffnung (14), das Bearbeiten, vorzugsweise Honen, der zweiten Lageröffnung (16) umfasst, wobei ein Werkzeug (58) zur Bearbeitung der zweiten Lageröffnung (16) während der Bearbeitung der zweiten Lageröffnung (16) über eine Zentriereinrichtung (60), die in die Statoröffnung (26) oder die erste Lageröffnung (14) eingreift, koaxial zu der Statoröffnung (26) oder der ersten Lageröffnung (14) ausgerichtet ist.

8. Verfahren nach einem der voranstehenden Ansprüche, **dadurch gekennzeichnet, dass** die Bearbeitung der ersten Lageröffnung (14) und ggf. der zweiten Lageröffnung (16) wenigstens einen der Bearbeitungsschritte Honen, Feinbohren und Reiben umfasst.

9. Verfahren nach einem der voranstehenden Ansprüche, **dadurch gekennzeichnet, dass** das Honen der Statoröffnung (26) unter Verwendung von Honleisten (38) mit Diamant als Schneidmaterial (40) und/oder dass das Honen der Statoröffnung (26) unter Verwendung von Honleisten (38) erfolgt, die ein Schneidmaterial (40) mit einer mittleren Korngröße aufweisen, die kleiner ist als die Dicke der Bleche (30) des Stators (24), und/oder dass das Honen der Statoröffnung (26) unter Verwendung von Honleisten (38) erfolgt, die eine Schneidmittelkonzentration von höchstens 20 Vol%, insbesondere 17,5 Vol%, insbesondere 15 Vol%, insbesondere 12,5 Vol%, aufweisen.

10. Verfahren nach einem der voranstehenden Ansprüche, **dadurch gekennzeichnet, dass** das Honen der Statoröffnung (26) mit einem Honwinkel von weniger als 30° erfolgt.

11. Verfahren nach einem der voranstehenden Ansprüche, **dadurch gekennzeichnet, dass** eine Zentriereinrichtung (60) verwendet wird, die radial zustellbar ausgeführt ist.

## Claims

1. A method for machining a stator opening (26) of a stator (24) and a bearing opening (14) of an electromechanical converter (10), in particular an electric motor, the method comprising the steps of honing the stator opening (26) using a honing tool (36) and machining, preferably honing, the bearing opening (14), **characterized in that**
a tool (50) for machining the bearing opening (14) is aligned coaxially with the stator opening (26) during the machining of the bearing opening (14) via a centering device (52) which engages in the stator opening (26),
or **in that**
the honing tool (36) for honing the stator opening (26) is aligned coaxially with the bearing opening (14) via a centering device (72) which engages in the bearing opening (14).

2. The method according to claim 1, **characterized in that** the stator (24) is joined to a housing section (15) which comprises the bearing opening (14) during the honing of the stator opening (26).

3. The method according to claim 1, **characterized in that** the stator (24) is not joined to a housing section (15) which comprises the bearing opening (14) during the honing of the stator opening (26).

4. The method according to any one of the preceding claims, **characterized in that** the stator opening (26) is honed before the bearing opening (14) is machined, preferably honed.

5. The method according to any one of preceding claims 1 or 2, **characterized in that** the honing of the stator opening (26) and the machining of the bearing opening (14) take place simultaneously, preferably with the bearing opening (14) being honed, in particular with the stator opening (26) and the bearing opening (14) taking place simultaneously using a tiered honing tool (51) having two honing sections (36, 50) separated from one another.

6. The method according to any one of the preceding claims, **characterized in that** the method after the honing of the first bearing opening (14), and preferably the stator opening (26) as well comprises the attachment of a second housing section (17) having a second bearing opening (16) to the first housing section (15), which comprises the first bearing opening (14) .

7. The method according to any one of the preceding claims, **characterized in that** the method after the honing of the stator opening (26) and the machining of the first bearing opening (14) comprises the machining, preferably honing, of the second bearing opening (16), a tool (58) for machining the second bearing opening (16) being aligned coaxially with the stator opening (26) or the first bearing opening (14) via a centering device (60) which engages in the stator opening (26) or the first bearing opening (14) during the machining of the second bearing opening (16).

8. The method according to any one of the preceding claims, **characterized in that** the machining of the first bearing opening (14) and, where applicable, the second bearing opening (16) comprises at least one of the machining steps among honing, fine boring and reaming.

9. The method according to any one of the preceding claims, **characterized in that** the stator opening (26) is honed using honing stones (38) with diamond as cutting material (40) and/or that the stator opening (26) is honed using honing stones (38) that have a cutting material (40) with an average grain size that is smaller than the thickness of the lamina (30) of the stator (24), and/or that the stator opening (26) is honed using honing stones (38) which have a cutting agent concentration of at most 20 vol%, in particular 17.5 vol%, in particular 15 vol%, in particular 12.5 vol%.

10. The method according to any one of the preceding claims, **characterized in that** the stator opening (26) is honed with a honing angle of less than 30°.

11. The method according to any one of the preceding claims, **characterized in that** a centering device (60) is used that is designed to be radially adjustable.

## Revendications

1. Procédé d'usinage d'une ouverture de stator (26) d'un stator (24) et d'une ouverture de palier (14) d'un convertisseur électromécanique (10), en particulier d'un moteur électrique, dans lequel le procédé comprend les étapes de rodage de l'ouverture de stator (26) au moyen d'un outil de rodage (36) et d'usinage, de préférence de rodage, de l'ouverture de palier (14), **caractérisé par le fait que**
lors de l'usinage de l'ouverture de palier (14), un outil (50) destiné à usiner l'ouverture de palier (14) est orienté de façon coaxiale par rapport à l'ouverture de stator (26) par l'intermédiaire d'un dispositif de centrage (52) qui s'engage dans l'ouverture de stator (26),
ou que
l'outil de rodage (36) destiné à roder l'ouverture de stator (26) est orienté de façon coaxiale par rapport à l'ouverture de palier (14) par l'intermédiaire d'un dispositif de centrage (72) qui s'engage dans l'ouverture de palier (14).

2. Procédé selon la revendication 1, **caractérisé par le fait que**, lors du rodage de l'ouverture de stator (26), le stator (24) est relié à un tronçon de carter (15) qui comprend l'ouverture de palier (14).

3. Procédé selon la revendication 1, **caractérisé par le fait que**, lors du rodage de l'ouverture de stator (26), le stator (24) est non relié à un tronçon de carter (15) qui comprend l'ouverture de palier (14).

4. Procédé selon l'une quelconque des revendications précédentes, **caractérisé par le fait que** l'ouverture de stator (26) est rodée avant que l'ouverture de palier (14) soit usinée, de préférence rodée.

5. Procédé selon l'une quelconque des revendications précédentes 1 ou 2, **caractérisé par le fait que** le rodage de l'ouverture de stator (26) et l'usinage de l'ouverture de palier (14) ont lieu en même temps, de préférence dans lequel l'ouverture de palier (14) est rodée, en particulier dans lequel l'ouverture de stator (26) et l'ouverture de palier (14) sont usinées en même temps en utilisant un outil de rodage étagé (51) ayant deux sections de rodage (36, 50) séparées l'une de l'autre.

6. Procédé selon l'une quelconque des revendications précédentes, **caractérisé par le fait que**, après le rodage de la première ouverture de palier (14), de préférence et de l'ouverture de stator (26), le procédé comprend l'action de rapporter un deuxième tronçon de carter (17) ayant une deuxième ouverture de palier (16) au premier tronçon de carter (15) qui comprend la première ouverture de palier (14).

7. Procédé selon l'une quelconque des revendications précédentes, **caractérisé par le fait que**, après le rodage de l'ouverture de stator (26) et l'usinage de la première ouverture de palier (14), le procédé comprend l'usinage, de préférence le rodage, de la deuxième ouverture de palier (16), dans lequel un outil (58) destiné à usiner la deuxième ouverture de palier (16) est orienté, lors de l'usinage de la deuxième ouverture de palier (16), de façon coaxiale par rapport à l'ouverture de stator (26) ou à la première ouverture de palier (14), par l'intermédiaire d'un dispositif de centrage (60) qui s'engage dans l'ouverture de stator (26) ou la première ouverture de palier (14).

8. Procédé selon l'une quelconque des revendications précédentes, **caractérisé par le fait que** l'usinage de la première ouverture de palier (14) et le cas échéant de la deuxième ouverture de palier (16) comprend au moins l'une des étapes d'usinage qui est le rodage, l'alésage de finition et l'alésage.

9. Procédé selon l'une quelconque des revendications précédentes, **caractérisé par le fait que** le rodage de l'ouverture de stator (26) se fait en utilisant des baguettes de rodage (38) présentant du diamant en tant que matériau de coupe (40) et/ou que le rodage de l'ouverture de stator (26) se fait en utilisant des baguettes de rodage (38) qui présentent un matériau de coupe (40) d'une granulométrie moyenne qui est inférieure à l'épaisseur des tôles (30) du stator (24), et/ou que le rodage de l'ouverture de stator (26) se fait en utilisant des baguettes de rodage (38) qui présentent une concentration en agent de coupe de 20 % en volume tout au plus, en particulier de 17,5 % en volume, en particulier de 15 % en volume, en particulier de 12,5 % en volume.

10. Procédé selon l'une quelconque des revendications précédentes, **caractérisé par le fait que** le rodage de l'ouverture de stator (26) se fait avec un angle de rodage inférieur à 30°.

11. Procédé selon l'une quelconque des revendications précédentes, **caractérisé par le fait que** l'on utilise un dispositif de centrage (60) qui est conçu de manière à pouvoir être avancé radialement.
